(19) Europäisches Patentamt
European Patent Office
Office européen des brevets

(11) **EP 3 394 919 B1**

(12) **EUROPEAN PATENT SPECIFICATION**

(45) Date of publication and mention
of the grant of the patent:
**29.04.2020 Bulletin 2020/18**

(21) Application number: **16815541.4**

(22) Date of filing: **14.12.2016**

(51) Int Cl.:
*C01G 45/12* (2006.01)   *H01M 4/1391* (2010.01)
*H01M 4/505* (2010.01)   *H01M 4/525* (2010.01)
*H01M 10/0525* (2010.01)   *C01G 53/00* (2006.01)

(86) International application number:
**PCT/IB2016/057611**

(87) International publication number:
**WO 2017/109646 (29.06.2017 Gazette 2017/26)**

(54) **SPINEL MATERIAL**

SPINELLMATERIAL

MATÉRIAU DE SPINELLE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **22.12.2015 ZA 201509296**

(43) Date of publication of application:
**31.10.2018 Bulletin 2018/44**

(73) Proprietor: **CSIR**
**0002 Pretoria (ZA)**

(72) Inventors:
• **OZOEMENA, Kenneth Ikechukwu**
**0181 Pretoria (ZA)**
• **RAJU, Kumar**
**0002 Pretoria (ZA)**

(74) Representative: **J A Kemp LLP**
**14 South Square**
**Gray's Inn**
**London WC1R 5JJ (GB)**

(56) References cited:
**WO-A2-2016/070205**

• **CHARL J. JAFTA ET AL: "Microwave-Assisted
Synthesis of High-Voltage Nanostructured LiMn
1.5 Ni 0.5 O 4 Spinel: Tuning the Mn 3+ Content
and Electrochemical Performance", ACS
APPLIED MATERIALS & INTERFACES, vol. 5, no.
15, 14 August 2013 (2013-08-14), pages
7592-7598, XP055095253, ISSN: 1944-8244, DOI:
10.1021/am401894t**
• **LIU H ET AL: "Solid chemical reaction in
microwave and millimeter-wave fields for the
syntheses of LiMn2O4 compound", MATERIALS
CHEMISTRY AND PHYSICS, ELSEVIER SA,
SWITZERLAND, TAIWAN, REPUBLIC OF CHINA,
vol. 88, no. 2-3, 15 December 2004 (2004-12-15),
pages 290-294, XP004598756, ISSN: 0254-0584,
DOI: 10.1016/J.MATCHEMPHYS.2004.06.037**
• **SANTHANAM R ET AL: "Research progress in
high voltage spinel LiNi0.5Mn1.5O4 material",
JOURNAL OF POWER SOURCES, ELSEVIER SA,
CH, vol. 195, no. 17, 1 September 2010
(2010-09-01), pages 5442-5451, XP027046711,
ISSN: 0378-7753 [retrieved on 2010-05-12]**

**Description**

THIS INVENTION relates to a spinel material. It relates in particular to a process for producing a spinel material, to an electrochemical cell containing the spinel material, to a method of making the electrochemical cell, and to a method of operating the electrochemical cell.

Rechargeable lithium-ion batteries (RLIBs) have emerged as the most dominant power sources for portable electronics and electric vehicles, and will remain so for many years to come. Spinel, layered and olivine materials are the most important cathode materials for the RLIBs. Manganese-based spinel materials have, over time, become more attractive due to their inherent advantageous properties such as earth-abundance, low-cost, environmental benignity and satisfactory thermal stability. Lithium manganese oxide, $LiMn_2O_4$ (LMO) spinel cathode material for RLIBs is the cathode material that drives some electric vehicles. Two main challenges that still confront this cathode material are (i) a disproportionation reaction and (ii) Jahn-Teller effects, especially at elevated temperatures (about 55°C and higher). Indeed, the LMO combined with its robust spinel framework exhibits an astonishing cycle life associated with substantial capacity retention at room temperature. However, LMO suffers, at elevated temperatures, from rapid capacity fading with cycling due to manganese dissolution which limits the practical use of this material for large-scale applications. In particular, the Mn-dissolution arises from the disproportionate reaction of $Mn^{3+}$ ions into $Mn^{2+}$ and $Mn^{4+}$ ions, with $Mn^{2+}$ dissolution into the electrolyte which then gets deposited as metal on the surface of the negative electrode, and $Mn^{4+}$ being involved in promoting the electro-inactive layer on the positive side that could create defects in the lattice. To alleviate these problems that cause capacity fading, surface-coating with metal oxides and partial substitution of Mn ions with other metal ions to reduce $Mn^{3+}$ that could partially minimize the Mn-dissolution and improve cycle retention to some extent, have been proposed. It has been reported that when the core-shell structure of LMO is decorated with a nickel-doped LMO (LMNO) shell, extensive cycle stability at 60°C is experienced; however, this involves an expensive method for the preparation of the material. On the other hand, the surface modification of electrode materials can also pave the way to improve the stability, for instance, the excellent performance of which allows thinner solid electrolyte interphase (SEI) formation than {110} facets, has been demonstrated. It is well established that the poor electrochemical performance of the LMO at elevated temperature stems from the instability of the $Mn^{3+}$ by its disproportionation to $Mn^{2+}$ and $Mn^{4+}$, and the subsequent fast dissolution of the divalent species and the creation of lattice defects within the structure. Also, the $Mn^{3+}$-rich disordered form of high-voltage nickel-doped LMO (i.e., $LiMn_{1.5}Ni_{0.5}O_{4-\delta}$) is known to show better electrochemical performance at elevated temperature (60°C) than its $Mn^{4+}$-rich ordered counterpart (i.e., $LiMn_{1.5}Ni_{0.5}O_4$). LMO chemistry can be improved by doping with very small amount of the nickel, e.g., $LiNi_{0.2}Mn_{1.8}O_4$. Besides, strengthening the $[MnO_6]$ octahedron is critical to restrain the Jahn-Teller effect and to avoid partial Ni occupation of the Li 8a sites by optimizing the Ni content; this is achieved with the highly stable spinel stoichiometry is $LiMn_{1.8}Ni_{0.2}O_4$.

Charles J. Jafta et al., in the article "Microwave-Assisted Synthesis of High-Voltage Nanostructured LiMn1.5Ni0.5O4 Spinel: Tuning the Mn3+ Content and Electrochemical Performane", ACS APPLIED MATERIALS & INTERFACES, Vol. 5, no 15, 14 August 2013, pages 7592 - 7598, deal specifically with nanostructured $LiNi_{0.5}Mn_{1.5}O_4$ spinel material which is produced by a modified Pechini-method (sol-gel method).

Liu H et al., in the article "Solid chemical reaction in microwave and millimeter-wave field for the syntheses of LiMn2O4 compound", MATERIALS CHEMISTRY AND PHYSICS, Elsevier, vol. 88, no 2 - 3, 15 December 2004, disclose a process for producing a lithium-manganese-oxide spinel material using a microwave furnace to heat a $LiMn_2O_4$ spinel precursor.

Santhanam R et al., in the article "Research progress in high voltage spinel LiNi0.5Mn1.5O4 material", JOURNAL OF POWER SOURCES, Elsevier, vol. 195, no. 17, 1 September 2010, pages 5442 - 5451, disclose a process for producing a doped lithium-manganese-oxide spinel material.

According to a first aspect of the invention, there is provided a process for producing a doped lithium-manganese-oxide spinel material, which process includes

heating a mixture of a solid manganese precursor material, a solid nickel precursor material, a solid lithium precursor material and a fuel or reducing agent to an elevated temperature, and maintaining it at the elevated temperature for a period of time to produce a spinel precursor comprising lithium-manganese-oxide doped with nickel;
subjecting the precursor to microwave treatment, to obtain a treated precursor; and thereafter
annealing the treated precursor, to obtain a nickel-doped lithium-manganese-oxide spinel material.

By 'solid' is meant that the reactants are in a non-liquid form, e.g. in a solid particulate or powdered form.

The solid manganese precursor material may be an oxide, a hydroxide or a salt of manganese, e.g. $Mn_3O_4$; the solid nickel precursor material may be an oxide, a hydroxide or a salt of nickel, e.g. NiO; the solid lithium precursor material may be an oxide, a hydroxide or a salt of lithium, e.g. $Li_2CO_3$; and the fuel or reducing agent may be urea, hydrazine, glycine, a carbohydrate such as sucrose, etc; however, a solid fuel such as urea is preferred.

If necessary, the mixture may be comminuted to render it into particulate, e.g. powdered, form, before it is heated.

The reactants may be used in molar amounts to produce the desired spinel material; however, an excess, e.g. a 10% excess, of $Li_2CO_3$ may be used to compensate for loss thereof at elevated temperatures.

The elevated temperature to which the mixture is heated may be at least 400°C, preferably about 500°C.

The period of time for which the mixture is maintained at the elevated temperature may be at least 5 minutes, preferably about 7 minutes.

The microwave treatment may comprise subjecting the precursor to microwaves for between 10 and 30 minutes, typically for about 20 minutes. The microwaves may typically be at $\lambda$=0.12236, with the microwave power during the treatment being about 600W. However, the microwave power may be less than or greater than 600W.

The annealing of the treated precursor will be effected at a temperature which is sufficiently high to crystallize the precursor. Thus the annealing may be effected at a temperature of at least 700°C, more preferably at about 800°C or higher, most preferably at about 900°C. The annealing may be effected for a period of time which is long enough to achieve a desired degree of annealing, i.e. to achieve a desired degree of crystallinity of the powder. Typically, the annealing time will be less than 12 hours, e.g. about 6 hours.

The nickel-doped lithium-manganese-oxide material is thus that obtained by means of a microwave assisted solid-state reaction process.

The lithium-manganese-oxide material may be $LiMn_2O_4$ ('LMO'), while the nickel-doped lithium-manganese-oxide spinel material is $LiMn_{1.8}Ni_{0.2}O_4$ ('LMNO').

The invention extends to a nickel-doped lithium-manganese-oxide spinel material when produced by the process of the first aspect of the invention.

According to a second aspect of the invention, there is provided an electrochemical cell, which includes a cell housing, a cathode, an anode and an electrolyte in the cell housing, in which the cathode is electronically insulated from the anode but electrochemically coupled thereto by the electrolyte, the cathode comprising a nickel-doped lithium-manganese-oxide spinel material produced by the process of the first aspect of the invention, and the cell being capable of being subjected to at least 50 charging/discharging cycles at an elevated operating temperature, while maintaining at least 80% of its initial capacity..

The anode may comprise lithium (Li).

Any suitable electrolyte may be used, e.g. $LiPF_6$, optionally admixed with ethylene carbonate and/or dimethylcarbonate.

According to a third aspect of the invention, there is provided a method of making an electrochemical cell, which includes loading, into a cell housing, an electrolyte, an anode and cathode, with the cathode comprising a nickel-doped lithium-manganese-oxide spinel material produced by the process of the first aspect of the invention.

According to a fourth aspect of the invention, there is provided a method of operating an electrochemical cell, which method includes

applying a charging potential to the electrochemical cell of the second aspect of the invention, thereby causing lithium from the cathode to form at least part of the anode; and

permitting the discharging potential of the cell to reach 3.5 to 4.3 V vs, lithium metal, and with the average manganese valence state being about 3.5+ or higher during charge and discharge of the cell; and

subjecting the cell to at least 50 charging/discharging cycles at an elevated operating temperature, with each cycle comprising applying both the charging potential and the discharging potential, while maintaining at least 80% of the cell's initial capacity.

The discharge potential may be permitted to reach 3.8 to 4.2 V vs lithium metal.

The number of such cycles to which the cell is subjected is typically at least 100, while maintaining at least 80% of its initial capacity, even at an elevated operating temperature, such as at about 60°C.

The invention will now be described in more detail with reference to the accompanying drawings and the following non-limiting examples.

The number of such cycles to which the cell is subjected may be at least 50, and typically at least 100, while maintaining at least 80% of its initial capacity, even at an elevated operating temperature, such as at about 60°C.

The invention will now be described in more detail with reference to the accompanying drawings and the following non-limiting examples.

In the drawings

FIGURE 1 shows, for the Example, structural characterization of $Mn_3O_4$, LMNO and LMNO$_{mic}$: (a) XRD profile of $Mn_3O_4$, (b) and (c) SEM and HRTEM images of $Mn_3O_4$ with corresponding SAED pattern, (d) and (e) XRD pattern of LMNO and LMNO$_{mic}$ with Rietveld refinement, (f) and (g) SEM images of LMNO and LMNO$_{mic}$, (h) single nano-octahedron of LMNO, and ((i) and (j)) d-spacing of LMNO with the corresponding SAED pattern;

FIGURE 2 shows, for the Example, XPS spectra obtained for (a) LMNO and (b) LMNO$_{mic}$;

FIGURE 3 shows, for the Example, $^6$Li MAS NMR spectra of LMNO and LMNO_mic, with an expanded view of 560-440 ppm;

FIGURE 4 shows, for the Example, electrochemical analysis of LMNO and LMNO_mic at room temperature and at 60°C: (a) cyclic voltammetry at a scan rate of 1mVs[-1], (b) charge-discharge at a current density of 0.1C, (c) prolonged cycling with coulombic efficiency at room temperature at a current density of 0.1C, (d) rate capability at different current densities, (e) discharge curves of LMNO_mic with current density of 0.1C at 60°C, and (f) prolonged cycling of LMNO_mic with coulombic efficiency at a current density of 0.1C at 60°C; and

FIGURE 5 shows, for the Example, electrochemical impedance spectra of LMNO and LMNO_mic at different voltage ranges before (a) and (c) and after ((b) and (d)) 50 cycles at 60°C.

## EXAMPLE

### Experimental

### Reagents and synthesis of LMNO and LMNO_mic

First, the manganese precursor material ($Mn_3O_4$) was obtained from electrolytic manganese dioxide ($MnO_2$ = 92.46% purity, Delta EMD (Pty) Ltd, South Africa) by using the established method of high-temperature annealing at 1050°C in air for 74 h, as descried in Komaba et al.[1] The purity and morphology of the $Mn_3O_4$ were established from SEM, TEM and XRD. NiO (> 99% pure), $Li_2CO_3$ (> 99% pure) and urea (> 99% pure) were obtained from the Sigma-Aldrich and used without further treatment. The $LiNi_{0.2}Mn_{1.8}O_4$ (LMNO) was synthesized using a similar method to that of Yang et al.[2] In brief, stoichiometric amount of reagents $Li_2CO_3$, NiO and the as-prepared $Mn_3O_4$ (molar ratio of Li:Mn:Ni = 1.15:1.8:0.2) were ground using a mortar and pestle. A 10% excess of $Li_2CO_3$ was used to compensate for the easy loss of Li at high temperature heating. Urea (0.57 M per lithium) was added to the mixture and then ground to fine powder. The mixture was thereafter preheated at 500°C for about 7 min. Upon cooling down to room temperature in air, the preheated spinel precursor was ground into fine powder and then divided into two equal portions; the first portion was directly annealed at 900°C for 6 h, while the second portion was subjected to microwave irradiation at 600W for 20 min (using the Anton Paar Multiwave 3000 system, $\lambda$ = 0.12236m) before annealing at 900°C for 6 h. The spinel materials without and with microwave irradiation are abbreviated herein as LMNO and LMNO_mic, respectively.

### Characterization techniques

The XRD patterns of the as-prepared $Mn_3O_4$, LMNO and LMNO_mic were obtained from PANalytical X'Pert PRO diffractometer equipped with Ni-filtered Cu K-alpha radiation ($\lambda$ = 1.541841 A). X-ray Photoelectron Spectroscopy (XPS) was performed for LMNO and LMNO_mic using a non-monochromatic aluminium (Al) K$\alpha$ source (1486.6eV) and an Al monochromatic K$\alpha$ source (1486.6 eV), respectively. The XPS data analysis was performed with the XPS Peak 4.1 program and a Shirley function was used to subtract the background. The morphology of the as-synthesized powders was analysed using JEOL- JSM 7500F scanning electron microscope operated at 2.0 kV. TEM and HRTEM images were obtained from JEOL-Jem 2100 microscope operated at an acceleration voltage of 200 kV. All the NMR experiments were performed on a Bruker Avance 500 MHz (B0 = 11.7 Tesla) Wide bore spectrometer. $^6$Li and $^7$Li NMR measurements were done at corresponding Larmor frequencies of 73.59 and 194.36 MHz respectively using a 3.2 mm CPMAS probe. $^6$Li NMR was collected using a rotor synchronized Hahn echo sequence (90-tau-180-tau acquisition) at 20 kHz spinning speed. 90° pulse lengths of 6$\mu$s and a relaxation delay of 0.5 s was used. $^7$Li NMR was collected using a single pulse at MAS rates of 17, 20, 23 kHz for identifying the center bands. 2$\mu$s pulse was used for excitation (90° pulse was 4.6 $\mu$s) and a relaxation delay of 0.5 s was used. All the spectra were referenced to standard 1 M LiCl solution at 0 ppm. All the electrochemical analyses were carried out in a coin cell (LIR-2032) fabricated with as-prepared LMNO and LMNO_mic as the positive electrodes and lithium metal foil as the negative using a MACCOR series 4000 tester. The positive electrodes were prepared by coating the slurry mixture of the electrode material, acetylene black and polyvinylidene fluoride (80:10:10) onto a cleaned and polished aluminium foil, and dried in a vacuum oven at 80°C overnight. The cells were assembled in an argon-filled MBraun® glovebox ($O_2$, $H_2O$ < 0.5 ppm). The electrolyte was 1 M $LiPF_6$ in a mixture of 1:1 (v/v) ethylene carbonate (EC)/dimethyl carbonate (DMC) while Cellgard 2300 was used as the separator. The cyclic voltammetry (CV) and electrochemical impedance (EIS) analysis were carried out on a Bio-Logic VMP3 Potentiostat/Galvanostat controlled by EC-Lab v10.40 software.

### Results and Discussion

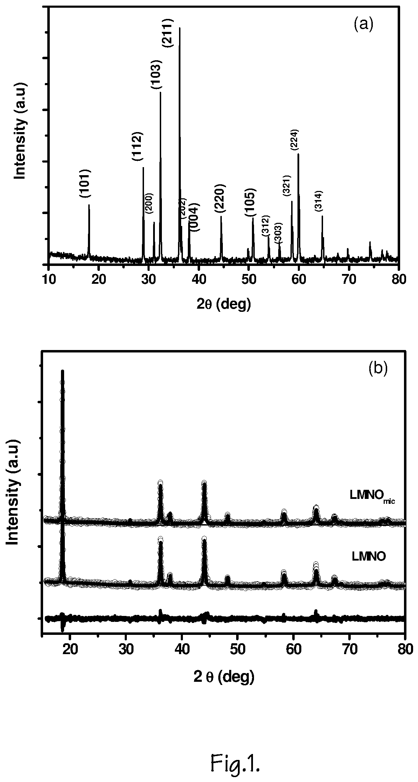

Fig.1a shows the XRD pattern of the as-prepared $Mn_3O_4$ with peaks that can be indexed to the tetragonal $Mn_3O_4$ spinel (JCPDS no: 80-0382) with space group $I4_1/amd$. The obtained well-defined reflections with no impurity phases indicate that the as-prepared $Mn_3O_4$ is highly crystalline.

Fig.1b shows the XRD profiles of LMNO and $LMNO_{mic}$ with their Rietveld refinement. This confirms that the prepared materials have typical single phase spinel structures, which adopt the Fd-3m space group with lithium and transition metals located in 8a and 16d sites respectively. The calculated lattice parameters of the pristine (a = 8.211 Å) and microwave treated (a = 8.213 Å) are essentially the same and are in agreement with literature.[3]

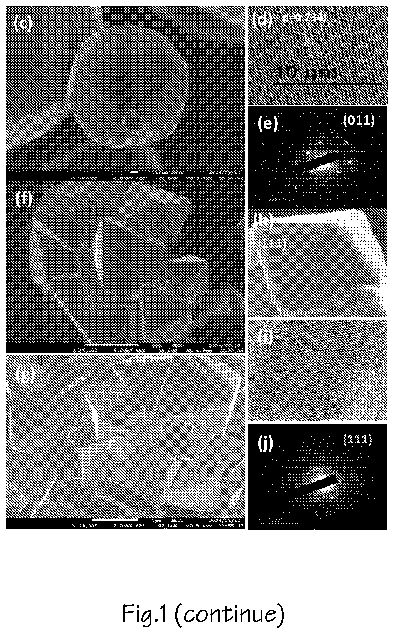

Fig.1c depicts the SEM image of $Mn_3O_4$, and the lattice fringes (Fig.1d) with its corresponding selected area diffraction, SAED pattern (Fig.1e). It is clearly seen from the figures that the as-prepared $Mn_3O_4$ exhibits tetragonally-distorted spinel morphology in micron size. From HRTEM image of lattice fringes, it has an average neighbouring fringes with distance of 0.234 nm, corresponding to the {011} facets. This is also confirmed by using SAED pattern. Fig.1f and g show the SEM images of LMNO and $LMNO_{mic}$, magnified view of one well-defined octahedron particle display {111} facets (Fig. 1h) and the HRTEM image of lattice fringe of LMNO with corresponding SAED pattern (Fig.1i and j). As can be seen from the figures, LMNO and $LMNO_{mic}$ exhibit the distinct morphology of octahedron with well-resolved lattice fringes (Fig.1i) and the spacing between the adjacent fringes was measured to be 0.25 nm corresponding to d-spacing of (111) direction (Fig.1j). As displayed by the HRTEM images, clear lattice fringes and diffraction spots of LMNO and $LMNO_{mic}$ expose the {111} facets with single crystalline octahedron. EDX confirmed the stoichiometry of LMNO and $LMNO_{mic}$ as $LiMn_{1.8}Ni_{0.2}O_4$.

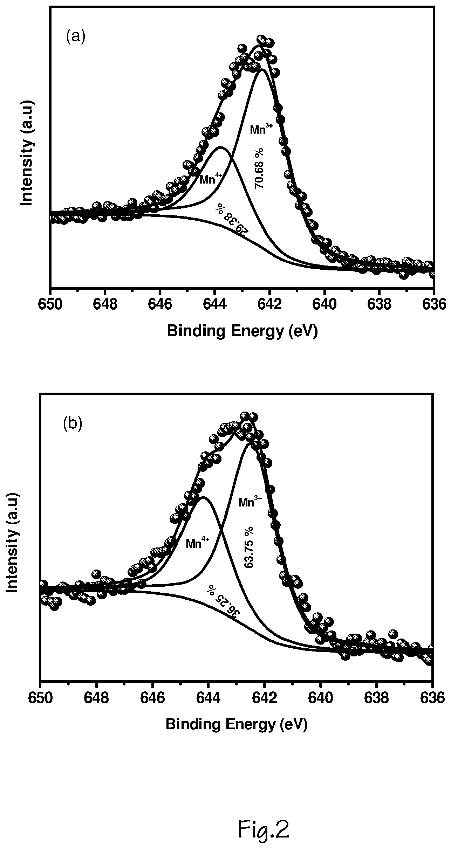

Fig.2 compares the XPS of deconvoluted Mn $2p_{3/2}$ peaks of the LMNO and $LMNO_{mic}$ samples. Each of the deconvoluted spectra gives two binding energy values corresponding to the characteristic peaks of $Mn^{3+}/Mn^{4+}$ at 642.17/643.59 and 642.43/644.12 eV, and the values are very close in accordance with reported values. The Ni 2p peak could not be viewed owing to its low intensity as a result from the low Ni content in the samples. Table 1 summarizes the XPS data, including the ratio of $Mn^{3+}/Mn^{4+}$ and manganese valence of the LMNO and $LMNO_{mic}$.

**Table 1:** XPS (Mn-2p3/2 spectra) data of the LMNO and LMNO samples

| Sample | Binding energy position (eV) | | Cation distribution | | | Mn Valence (average redox state) |
|---|---|---|---|---|---|---|
| | $Mn^{4+}$ | $Mn^{3+}$ | $Mn^{4+}$ (%) | $Mn^{3+}$ (%) | $Mn^{3+}/Mn^{4+}$ | |
| LMNO | 643.59 | 642.17 | 29.32 | 70.68 | 2.41 | 3.293 |
| LMNO mic | 644.12 | 642.43 | 36.25 | 63.75 | 1.75 | 3.363 |

From the XPS data in Table 1, the $LMNO_{mic}$ contains more of the $Mn^{3+}$ in its structure than in the LMNO. Evidently, microwave irradiation was able to tune the ratio of the $Mn^{3+}/Mn^{4+}$ from 2.41 (for LMNO) to 1.75 (for $LMNO_{mic}$), with the manganese average redox state (Mn valence) being 3.29 and 3.36 for LMNO and $LMNO_{mic}$, respectively.

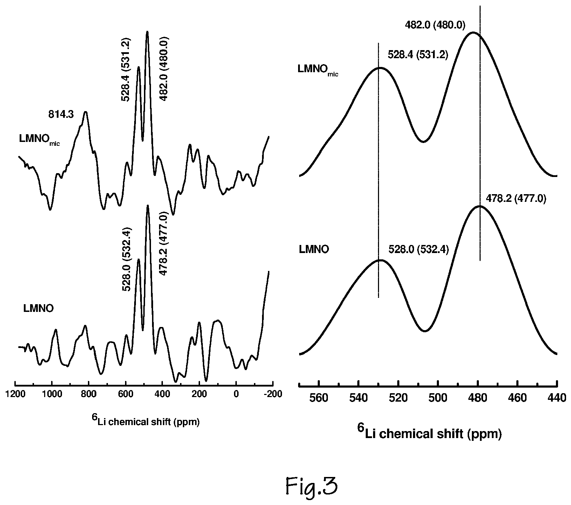

Solid-state $^6$Li Magic Angle Spinning Nuclear Magnetic Resonance (MAS-NMR) spectroscopy is highly sensitive to the local environment of the Li ion. $^6$Li MAS-NMR analyses were performed on LMNO and $LMNO_{mic}$ in order to investigate the effect of microwave irradiation on the local environment of Li ions. Fig.3 illustrates the $^6$Li MAS-NMR spectra of LMNO and $LMNO_{mic}$ that were recorded at spinning speed of 20 kHz. The dominant interactions between Li nuclear spins and Mn electron spins are either through-bond (Fermi-contact) or through-space (dipolar) interactions. Fermi-contact interactions shift Li NMR resonances to > 500 ppm, whereas the electron-nuclear dipolar interactions give raise to large spinning sideband patterns during MAS-NMR. For instance, the spinel $LiMn_2O_4$ gives major resonance of Li nuclei around ~520 ppm corresponding to the mixed-valence of $Mn^{3+}$ and $Mn^{4+}$ ions (average oxidation state of $Mn^{3.5+}$, i.e., cation distribution is 50% $Mn^{3+}$ and 50% $Mn^{4+}$). If the average oxidation state of Mn (i.e., Mn valence) around the local lithium site is increased, then the lithium chemical shift moves further downfield of 520 ppm. This increase in oxidation state of manganese ions in the local environment of lithium, results in a shift of the resonance to higher frequency. As shown in Fig. 3, two major $^6$Li resonances are observed at 528.4 and 482.0 ppm for $LMNO_{mic}$ and 528.0 and 478.2 ppm for LMNO, which can be assigned to the tetrahedrally coordinated Li+ surrounded by $Ni^{2+}$ and $Mn^{4+}$ ions. The slight shift of the peaks to the lower frequencies is attributed to the increased $Mn^{3+}$ content in the LMNO. Importantly, the peaks in the high frequency region (750 - 850 pm) region are due to $Mn^{4+}$, thus the broad high frequency resonance observed at 814.3 ppm for the $LMNO_{mic}$ clearly indicates that the microwave irradiation causes further increase in $Mn^{4+}$ concentration around Li+ which, in turn, results in the chemical shift of lithium resonance moving further downfield. Indeed, the $^6$Li MAS-NMR spectra clearly corroborate the XPS and XRD results that predict higher concentration of the $Mn^{3+}$ in the LMNO than in the $LMNO_{mic}$ spinel structure.

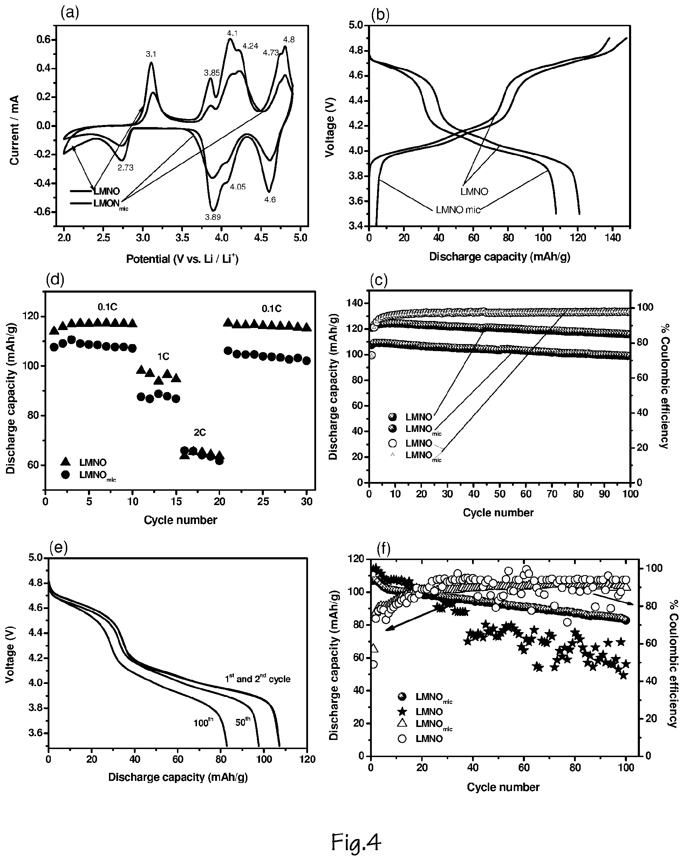

Cyclic voltammetry (CV) studies were performed on LMNO and $LMNO_{mic}$ at room temperature at a scan rate of 0.1 $mVs^{-1}$ in order to investigate the diffusion kinetics of lithium. Fig.4 a illustrates the CV profiles of LMNO and $LMNO_{mic}$ recorded in the potential window of 2 to 4.9V vs Li/Li+ that display very prominent anodic and cathodic peaks corresponding to the lithium extraction and insertion kinetics. The well-resolved pair of anodic peaks at 4.73 and 4.8 and their corresponding cathodic peaks at 4.6 and 4.7 V are related with the oxidation of $Ni^{2+}/Ni^{3+}$ and $Ni^{3+}/Ni^{4+}$ as well as Li extraction/insertion processes. Similarly, the shoulder peaks observed for both anodic (4.12 and 4.24V) and cathodic (3.89 and 4.05 V) regions are characteristic of $Mn^{3+}/Mn^{4+}$ redox reactions despite having a small difference in cathodic peaks (3.87 and 4.06 V) for the microwave irradiated sample. It is noteworthy to mention that the anodic peak obtained at 3.85V associated with the extraction of lithium resides at the octahedral sites. The peak intensity increases while increase in cycling as a result of an incomplete extraction of lithium that occupies the octahedral sites at 3.12 V. In addition, the strong peaks resolved at 3.1V for anodic and 2.73 V for cathodic infer that the intercalation of lithium is more pronounced even below 3V, the sharp peaks indicate that the as-prepared spinel has substantial stability even below 3V.

Fig. 4 (b) compares the galvanostatic charge-discharge of LMNO and LMNO$_{mic}$ samples at room temperature. The curves are typical signatures of LiMn$_{1.8}$Ni$_{0.2}$O$_4$. The well-defined plateaus around 4.73, 4.12 and 4.05 V regions for both samples, confirm the redox reactions of Ni and Mn. The pristine and microwave irradiated samples delivered comparable specific capacities of 121 and 108 mAh/g at room temperature, respectively. Both samples retained more than 95% of their initial capacity after 100 cycles and maintained excellent coulombic efficiency (Fig. 4c). Fig. 4d showed that both samples showed comparable rate capability, especially at 2C. At elevated temperature of 60° C (Fig. 4 e & f), the LMNO$_{mic}$ outperformed than the pristine LMNO-based cell, with a specific capacity of 108 mAh/g and good cycling stability, retained ~80% of its initial capacity with 90% coulombic efficiency after 100 repeated cycles). The LMNO delivered an initial capacity of 118 mAh/g at 60°C but the cycling stability is very poor, retaining about 40% of its initial capacity after 100 cycles. At room temperature, both LMNO and LMNO$_{mic}$ underwent almost similar electrochemical performances in terms of specific capacity and capacity retention. The microwave-treated spinel with slightly higher average Mn redox state exhibited good cycle stability at 60°C than the pristine LMNO. It can be concluded that the high capacity retention of the LMNO$_{mic}$ at elevated temperature is due to the ability of the microwave irradiation to tune the Mn valence or the $Mn^{3+}/Mn^{4+}$ ratio to an appropriate level for enhanced electrochemical performance. The poor performance of the LMNO at 60°C may be related to its higher $Mn^{3+}$ content which may be taking part in the disproportionation reaction. Despite that both spinel materials have same surface {111} facets, the slightly higher content of $Mn^{3+}$ in pristine may still allow the disproportionation reaction to occur.

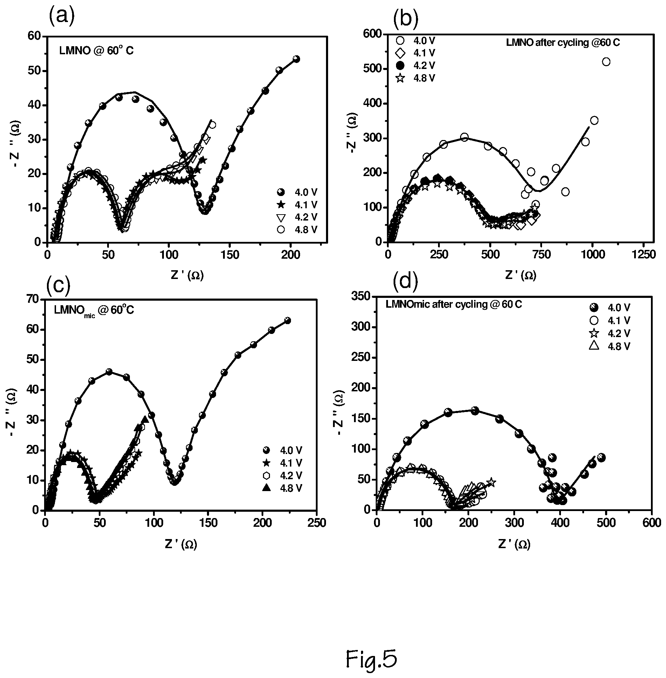

To provide further insights into the effects of microwave-treatment on the spinel materials, EIS experiments were carried out on LMNO- and LMNO$_{mic}$-based coin cells at different voltages after the freshly prepared cells were relaxed at OCV for 1 h. Fig.5a-f illustrate the Nyquist plots of LMNO and LMNO$_{mic}$ obtained before and after 50 charge-discharge cycles at 60°C. All the obtained EIS curves were satisfactorily fitted with an electrical equivalent circuit shown in Fig.5a (inset). The fitting parameters consist of depressed semicircle at high and intermediate frequency domain related to the solid-electrolyte interface (SEI) whose resistance is denoted as $R_f$, constant-phase element of surface film (CPE$_f$), interfacial capacitance (CPE$_{Li}$), the solution bulk resistance ($R_s$), the charge transfer resistance of lithium insertion and extraction ($R_{ct}$), the Warburg impedance ($Z_w$) due to the lithium-ion diffusion in the solid state. As seen in Fig. 5a-d, the formation of SEI layer becomes more stable for LMNO$_{mic}$ at all voltage range at the elevated temperature after 50 consecutive charge-discharge cycles, which results in the appearance of high frequency semicircle at all potentials investigated. The thin SEI layer formed may be due to the octahedral shaped particles with {111} facets suppressing the co-insertion of electrolyte and delivered larger lithium diffusion. Tables 2 and 3 summarise the values from the fitted Nyquist plots using the EEC for the LMNO and LMNO$_{mic}$, respectively. From Fig.5 and Tables 2 and 3, it is evident that the poor cycling performance of the LMNO at elevated temperature may be related to systematic rise in impedance arising from the $Mn^{3+}$ dissolution.

**Table 2: Summary of EIS parameters for the LMNO based coin cells; all values were obtained from the fitted impedance spectra after several iterations using the proposed equivalent electrical circuit shown in Fig. 5.**

| Applied potential (V) | EIS data for LMNO @ 60°C | | | | | | |
|---|---|---|---|---|---|---|---|
| | $R_s(\Omega)$ | $R_f(\Omega)$ | $CPE(\mu F)$ | n | $C_{Li}(mF)$ | $R_{Li}(\Omega)$ | $Zw$ $(\Omega.\omega^{-1/2})$ |
| Before cycling | | | | | | | |
| 4.0 | 8.25 ± 0.43 | 49.51 ± 6.48 | 25.93 ± 2.02 | 0.72 ± 0.14 | 13.7 ± 1.8 | 120 ± 1.26 | 20.36 ± 0.8 |
| 4.1 | 7.78 ± 0.52 | 41.84 ± 6.86 | 17.44 ± 0.75 | 0.73 ± 0.05 | 14.53 ± 5.76 | 54.64 ± 1.8 | 8.10 ± 0.97 |
| 4.2 | 6.05 ± 0.45 | 54.53 ± 2.06 | 15.79 ± 6.59 | 0.72 ± 0.18 | 11.6 ± 0.76 | 49.77 ± 3.64 | 6.94 ± 0.86 |

(continued)

| Applied potential (V) | EIS data for LMNO @ 60°C | | | | | | |
|---|---|---|---|---|---|---|---|
| | $R_s(\Omega)$ | $R_f(\Omega)$ | $CPE(\mu F)$ | n | $C_{Li}(mF)$ | $R_{Li}(\Omega)$ | $Zw$ $(\Omega.\omega^{-1/2})$ |
| Before cycling | | | | | | | |
| 4.8 | 5.54 ± 0.45 | 54.08 ± 2 | 17.08 ± 7.09 | 0.78 ± 0.21 | 9.51 ± 0.43 | 51.67 ± 2.49 | 5.22 ± 0.78 |
| After 50th cycle | | | | | | | |
| 4.0 | 11.14 ± 0.57 | 762 ±2.54 | 8.13 ± 0.42 | 0.72 ± 0.24 | 17.24 ±1.42 | 236 ± 5.74 | 34.21 ± 1.24 |
| 4.1 | 6.35 ± 0.84 | 531 ± 6.47 | 6.42 ± 0.74 | 0.67 ± 0.17 | 11.9 ± 1.34 | 241 ± 3.14 | 28.87 ± 3.72 |
| 4.2 | 2.62 ± 0.65 | 514.8 ± 15.37 | 1.35 ± 0.28 | 0.68 ± 0.51 | 10.08 ±1.04 | 383.2 ± 17.17 | 47.55 ± 0.78 |
| 4.8 | 5.43 ± 0.53 | 548.7 ± 19.73 | 5.92 ± 0.48 | 0.75 ± 0.57 | 1.41 ± 0.26 | 260 ± 3.62 | 36.98 ± 2.53 |

**Table 3: Summary of EIS parameters for the LMNO$_{mic}$-based coin cells; all values were obtained from the fitted impedance spectra after several iterations using the proposed equivalent electrical circuit shown in Fig. 5.**

| Applied potential (V) | EIS data for LMNO-mic @ 60°C | | | | | | |
|---|---|---|---|---|---|---|---|
| | $R_s(\Omega)$ | $R_f(\Omega)$ | $CPE(\mu F)$ | n | $C_{Li}(mF)$ | $R_{Li}(\Omega)$ | $Zw$ $(\Omega.\omega^{-1/2})$ |
| Before cycling | | | | | | | |
| 4.0 | 2.76 ± 0.34 | 11.15 ± 2.63 | 9.58 ± 0.45 | 0.72 ± 0.03 | 9.69 ± 0.9 | 46.51 ± 2.53 | 6.27 ± 2.62 |
| 4.1 | 2.58 ± 0.41 | 20.58 ± 3.57 | 9.37 ± 6.4 | 0.67 ± 0.13 | 25.5 ± 5.4 | 46.46 ± 3.91 | 10.07 ± 0.7 |
| 4.2 | 2.59 ± 0.39 | 17.13 ± 1.7 | 33.56 ± 18.05 | 0.52 ± 0.07 | 9.16 ± 6.6 | 42.46 ± 3.77 | 7.2 ± 2.4 |
| 4.8 | 5.15 ± 0.42 | 132.3 ± 20.6 | 12.41 ± 0.47 | 0.72 ± 0.15 | 11.44 ± 1.94 | 114 ± 1.68 | 12.97 ± 1.44 |
| After 50th cycle | | | | | | | |
| 4.0 | 4.13 ± 0.48 | 409.3 ± 2.23 | 9.74 ± 0.68 | 0.63 ± 0.05 | 5.44 ± 0.26 | 272.3 ± 9.42 | 51.66 ± 13.19 |
| 4.1 | 3.86 ± 0.21 | 173.35 ± 2.54 | 10.23 ± 0.57 | 0.61 ± 0.18 | 3.63 ± 0.38 | 94.68 ± 2.81 | 32.24 ± 5.34 |
| 4.2 | 2.17 ±0.34 | 164.71 ± 1.72 | 8.71 ± 1.73 | 0.64 ± 0.13 | 7.11 ± 1.53 | 105.41 ± 5.26 | 29.89 ± 2.71 |

(continued)

| After 50th cycle | | | | | | | |
|---|---|---|---|---|---|---|---|
| 4.8 | 1.86 ± 0.51 | 179.43 ± 2.78 | 9.18 ± 0.82 | 0.69 ± 0.57 | 4.69 ± 0.86 | 96.82 ± 2.37 | 36.22 ± 4.39 |

Lithium diffusion coefficients ($D_{Li}$) of the LMNO- and $LMNO_{mic}$-based coin cells were determined before and after 50 consecutive cycles at 25 °C and 60 °C respectively by using equation (eq.1) with Warburg impedance, $\sigma$, obtained from the slope of real impedance (Z') vs reciprocal square root of frequency ($\omega^{-1/2}$) in the low frequency region.[4]

$$D_{Li} = \frac{2R^2T^2}{n^4F^4\sigma^2A^2C_{Li}^2} \qquad \text{.................. (1)}$$

$$Z_\omega = \sigma\,(1 - j)\omega^{-\frac{1}{2}} \qquad \text{.................... (2)}$$

where R is the gas constant, T is the absolute temperature, n is the number of electrons transferred per molecule during oxidation, F is the Faraday constant, $C_{Li}$ is the lithium concentration in the cathode material and A is the geometric surface area of the cathode. The diffusion coefficients calculated at 4.2 V are found to be $3.32 \times 10^{-13}$, $1.6 \times 10^{-12}$, $2.8 \times 10^{-12}$ and $5.1 \times 10^{-12}$ cm$^2$ s$^{-1}$ at room temperature for LMNO, $LMNO_{mic}$ and their respective values after 50 charge-discharge cycles and the obtained values are in accordance with the values reported in the literature.[5] At 60°C, the spinel revealed the $D_{Li}$ of $2.03 \times 10^{-12}$ and $7.93 \times 10^{-12}$ cm$^2$ s$^{-1}$ for LMNO and $LMNO_{mic}$ respectively, and $1.38 \times 10^{-13}$ and $3.19 \times 10^{-12}$ cm$^2$ s$^{-1}$ for LMNO and $LMNO_{mic}$ after 50 repeated cycles, respectively. As expected that the microwave treated spinel have high diffusion coefficients even after prolonged cycling than the pristine.

## Conclusion

It was thus found that microwave irradiation on LMO chemistry along with small amounts of nickel doping improved the electrochemical performance of the spinel material at elevated temperature; microwave irradiation was confirmed as an essential step to achieve enhanced LMO electrochemistry. In addition, the [6,7]Li MAS NMR shows the two isotropic Li resonance for LMNO and LMNO-mic resulting in the additional peak at high frequency region which indicates the different Li environments by the distribution of Mn and Ni atoms. Spinel exposed most active {111} facets restricts the formation of thick SEI layers and improved the lithium diffusion. However, the existence of both $Mn^{3+}$ with more $Mn^{4+}$ concentration with active surface facets in the microwave irradiated spinel delivered a better cycle stability, low impedance, and improved lithium diffusivity at different temperatures compared to the untreated one.

The well-established poor electrochemical cycling performance of the $LiMn_2O_4$ (LMO) spinel cathode material for lithium-ion batteries at elevated temperature stems from the instability of the $Mn^{3+}$ concentration. Microwave-assisted solid-state reaction has been used to dope LMO with a very low amount of nickel (i.e., $LiNi_{0.2}Mn_{1.8}O_4$, or LMNO) for a lithium-ion battery using $Mn_3O_4$ prepared from electrolytic manganese oxide (EMD, $\gamma$-$MnO_2$). To establish the impact of microwave irradiation on the electrochemical cycling performance at elevated temperature (60°C), the $Mn^{3+}$ concentration in the pristine and microwave-treated LMNO samples was independently confirmed by XRD, XPS, [6]LiMAS-NMR and electrochemical studies including electrochemical impedance spectroscopy (EIS). The microwave-treated sample ($LMNO_{mic}$) allowed for the clear exposure of the {111} facets of the spinel, optimized the $Mn^{3+}$ content, promoting structural and cycle stability at elevated temperature. At room temperature, both the pristine (LMNO) and microwave-treated ($LMNO_{mic}$) samples gave comparable cycling performance (> 96% capacity retention and ca. 100% coulombic efficiency after 100 consecutive cycling). However, at elevated temperature (60°C), the $LMNO_{mic}$ gave an improved cycling stability (> 80% capacity retention and ca. 90% coulombic efficiency after 100 consecutive cycling) compared to the LMNO. For the first time, the impact of microwave irradiation on tuning the average manganese redox state of the spinel material to enhance the cycling performance of the $LiNi_{0.2}Mn_{1.8}O_4$ at elevated temperature and lithium-ion diffusion kinetics have been clearly demonstrated.

The preparation of nickel-doped LMO (i.e., $LiNi_{0.2}Mn_{1.8}O_4$) with microwave irradiation as an essential step to achieve enhanced electrochemistry has thus been demonstrated.

**References**

1. Komaba, S.; Tsuchikawa, T.; Ogata, A. Enhancement of Pseudo-capacitive Behaviors of Birnessite Type Manganese Dioxide by Electrolyte Additive. ECS Transactions, 2008, 16, 201-205.
2. Yang, K.; Su, J.; Zhang, L.; Long, Y.; Lv, X.; Wen, Y. Urea Combustion Synthesis of LiNi0.5Mn1.5O4 as a Cathode Material for Lithium Ion Batteries. Particuology, 2012, 10, 765-770.
3. Manthiram, A.; Chemelewski, K. R.; Lee, E. S. A Perspective on the High-Voltage LiMn1.5Ni0.5O4 Spinel Cathode for Lithium-Ion Batteries. Energy Environ. Sci., 2014,7, 1339-1350.
4. Jafta, C.J.; Ozoemena, K. I.; Mathe, M. K.; Roos, W. D. Synthesis, Characterisation and Electrochemical Intercalation Kinetics of Nanostructured Aluminium-Doped Li [Li0.2Mn0.54Ni0.13Co0.13]O2 Cathode Material for Lithium Ion Battery. Electrochim. Acta 2012, 85, 411-422.
5. Mohamedi, M.; Makino, M.; Dokko, K.; Itoh, T.; Uchida, I. Electrochemical Investigation of LiNi0.5Mn1.5O4 Thin Film Intercalation Electrodes. Electrochim.Acta 2002, 48, 79-84.

**Claims**

1. A process for producing a doped lithium-manganese-oxide spinel material, which process includes
   heating a mixture of a solid manganese precursor material, a solid nickel precursor material, a solid lithium precursor material and a fuel or reducing agent to an elevated temperature, and maintaining it at the elevated temperature for a period of time to produce a spinel precursor comprising lithium-manganese-oxide doped with nickel;
   subjecting the precursor to microwave treatment, to obtain a treated precursor; and thereafter
   annealing the treated precursor, to obtain a nickel-doped lithium-manganese-oxide spinel material.

2. The process according to Claim 1, wherein the solid manganese precursor material is an oxide, a hydroxide or a salt of manganese; the solid nickel precursor material is an oxide, a hydroxide or a salt of nickel; the solid lithium precursor material is an oxide, a hydroxide or a salt of lithium; and the fuel or reducing agent is urea, hydrazine, glycine, or a carbohydrate.

3. The process according to Claim 1 or Claim 2, wherein the elevated temperature to which the mixture is heated is at least 400°C, and/or wherein the period of time for which the mixture is maintained at the elevated temperature is at least 5 minutes, and/or wherein the microwave treatment comprises subjecting the precursor to microwaves for between 10 and 30 minutes, and/or wherein the annealing of the treated precursor is effected at a temperature which is sufficiently high to crystallize the precursor.

4. The process according to Claim 3, wherein the annealing is effected at a temperature of at least 700°C.

5. The process according to any one of Claims 1 to 4 inclusive, wherein the lithium-manganese-oxide material is $LiMn_2O_4$ ('LMO'), while the nickel-doped lithium-manganese-oxide spinel material is $LiMn_{1.8}Ni_{0.2}O_4$ ('LMNO').

6. A nickel-doped lithium-manganese-oxide spinel material when produced by the process of any one of Claims 1 to 5 inclusive.

7. An electrochemical cell, which includes a cell housing, a cathode, an anode and an electrolyte in the cell housing, in which the cathode is electronically insulated from the anode but electrochemically coupled thereto by the electrolyte, the cathode comprising a nickel-doped lithium-manganese-oxide spinel material produced by a process in accordance with any one of Claims 1 to 5, and the cell being capable of being subjected to at least 50 charging/discharging cycles at an elevated operating temperature, while maintaining at least 80% of its initial capacity.

8. The electrochemical cell according to Claim 7, wherein the elevated operating temperature is about 60°C, and/or wherein the nickel-doped lithium-manganese-oxide spinel material is that of Claim 5.

9. The electrochemical cell according to any one of Claims 7 or 8, wherein the anode comprises lithium (Li), and/or wherein the electrolyte is $LiPF_6$, optionally admixed with ethylene carbonate and/or dimethylcarbonate.

10. A method of making an electrochemical cell, which includes loading, into a cell housing, an electrolyte, an anode and cathode, with the cathode comprising a nickel-doped lithium-manganese-oxide spinel material produced by a process in accordance with any one of Claims 1 to 5.

11. The method according to Claim 10, wherein the nickel-doped lithium-manganese-oxide spinel material is that of Claim 5.

12. A method of operating an electrochemical cell, which method includes
applying a charging potential to the electrochemical cell of any one of Claims 7 to 9, thereby causing lithium from the cathode to form at least part of the anode;
permitting the discharging potential of the cell to reach 3.5 to 4.3 V vs lithium metal, and with the average manganese valence state being about 3.5+ or higher during charge and discharge of the cell; and
subjecting the cell to at least 50 charging/discharging cycles at an elevated operating temperature, with each cycle comprising applying both the charging potential and the discharging potential, while maintaining at least 80% of the cell's initial capacity.

13. The method according to Claim 12, wherein the discharge potential is permitted to reach 3.8 to 4.2 V vs lithium metal.

14. The method according to Claim 12 or Claim 13, wherein the elevated operating temperature is about 60°C.

**Patentansprüche**

1. Ein Verfahren zur Herstellung eines dotierten Lithium-Mangan-Oxid-Spinellmaterials, wobei das Verfahren umfasst Erhitzen eines Gemisches aus einem festen Manganvorläufermaterial, einem festen Nickelvorläufermaterial, einem festen Lithiumvorläufermaterial und einem Brennstoff oder Reduktionsmittel auf eine erhöhte Temperatur und Halten bei der erhöhten Temperatur für eine Zeitdauer, um einen Spinellvorläufer zu erzeugen, der mit Nickel dotiertes Lithium-Manganoxid umfasst;
Unterziehen des Vorläufers einer Mikrowellenbehandlung, um einen behandelten Vorläufer zu erhalten; und danach Tempern des behandelten Vorläufers, um ein mit Nickel dotiertes Lithium-Manganoxid-Spinellmaterial zu erhalten.

2. Das Verfahren gemäß Anspruch 1, wobei das feste Manganvorläufermaterial ein Oxid, ein Hydroxid oder ein Salz von Mangan ist; das feste Nickelvorläufermaterial ein Oxid, ein Hydroxid oder ein Salz von Nickel ist; das feste Lithiumvorläufermaterial ein Oxid, ein Hydroxid oder ein Salz von Lithium ist; und der Brennstoff oder das Reduktionsmittel Harnstoff, Hydrazin, Glycin oder ein Kohlenhydrat ist.

3. Das Verfahren gemäß Anspruch 1 oder Anspruch 2, wobei die erhöhte Temperatur, auf die das Gemisch erhitzt wird, mindestens 400°C beträgt und/oder wobei die Zeitdauer, für die das Gemisch auf der erhöhten Temperatur gehalten wird, mindestens 5 Minuten beträgt und/oder wobei die Mikrowellenbehandlung das Unterwerfen des Vorläufers unter Mikrowellen für zwischen 10 und 30 Minuten umfasst und/oder wobei das Tempern des behandelten Vorläufers bei einer Temperatur durchgeführt wird, die ausreichend hoch ist, um den Vorläufer zu kristallisieren.

4. Das Verfahren gemäß Anspruch 3, bei dem das Tempern bei einer Temperatur von mindestens 700°C durchgeführt wird.

5. Das Verfahren gemäß einem der Ansprüche 1 bis einschließlich 4, wobei das Lithium-Manganoxid-Material $LiMn_2O_4$ ("LMO") ist, während das mit Nickel dotierte Lithium-Manganoxid-Spinellmaterial $LiMn_{1.8}Ni_{0.2}O_4$ ("LMNO") ist.

6. Ein mit Nickel dotiertes Lithium-Manganoxid-Spinellmaterial, wenn es nach dem Verfahren gemäß einem der Ansprüche 1 bis einschließlich 5 hergestellt wird.

7. Eine elektrochemische Zelle, die ein Zellengehäuse, eine Kathode, eine Anode und einen Elektrolyten in dem Zellengehäuse enthält, wobei die Kathode von der Anode elektronisch isoliert, aber durch den Elektrolyten elektrochemisch mit ihr gekoppelt ist, wobei die Kathode ein mit Nickel dotiertes Lithium-Manganoxid-Spinellmaterial umfasst, das durch ein Verfahren gemäß einem der Ansprüche 1 bis 5 hergestellt wird, und die Zelle mindestens 50 Lade-/Entladezyklen bei einer erhöhten Betriebstemperatur unterzogen werden kann, während sie mindestens 80 % ihrer anfänglichen Kapazität beibehält.

8. Die elektrochemische Zelle gemäß Anspruch 7, wobei die erhöhte Betriebstemperatur etwa 60°C beträgt und/oder wobei das mit Nickel dotierte Lithium-Manganoxid-Spinellmaterial dasjenige gemäß Anspruch 5 ist.

9. Die elektrochemische Zelle gemäß einem der Ansprüche 7 oder 8, wobei die Anode Lithium (Li) umfasst und/oder wobei der Elektrolyt LiPF$_6$ ist, gegebenenfalls gemischt mit Ethylencarbonat und/oder Dimethylcarbonat.

10. Ein Verfahren zur Herstellung einer elektrochemischen Zelle, das das Laden eines Elektrolyten, einer Anode und einer Kathode in ein Zellengehäuse einschließt, wobei die Kathode ein mit Nickel dotiertes Lithium-Manganoxid-Spinellmaterial umfasst, das durch ein Verfahren gemäß einem der Ansprüche 1 bis 5 hergestellt wird.

11. Das Verfahren gemäß Anspruch 10, wobei das mit Nickel dotierte Lithium-Manganoxid-Spinellmaterial dasjenige gemäß Anspruch 5 ist.

12. Das Verfahren zum Betreiben einer elektrochemischen Zelle, wobei das Verfahren umfasst
Anlegen eines Ladepotentials an die elektrochemische Zelle gemäß einem der Ansprüche 7 bis 9, wodurch Lithium von der Kathode zumindest einen Teil der Anode bildet;
das Entladepotential der Zelle 3,5 bis 4,3 V gegenüber Lithiummetall erreichen lassen, wobei der durchschnittliche Mangan-Valenzzustand während des Ladens und Entladens der Zelle etwa 3,5+ oder höher ist; und
Unterziehen der Zelle mindestens 50 Lade-/Entladezyklen bei einer erhöhten Betriebstemperatur, wobei jeder Zyklus das Anlegen sowohl des Lade- als auch des Entladepotentials umfasst, während mindestens 80 % der Anfangskapazität der Zelle beibehalten werden.

13. Das Verfahren gemäß Anspruch 12, bei dem das Entladungspotential 3,8 bis 4,2 V gegenüber Lithiummetall erreichen darf.

14. Das Verfahren gemäß Anspruch 12 oder Anspruch 13, wobei die erhöhte Betriebstemperatur etwa 60°C beträgt.

**Revendications**

1. Procédé de production d'un matériau de spinelle d'oxyde de lithium-manganèse dopé, lequel procédé comprend le chauffage d'un mélange d'un matériau précurseur de manganèse solide, d'un matériau précurseur de nickel solide, d'un matériau précurseur de lithium solide et d'un combustible ou d'un agent réducteur à une température élevée, et son maintien à cette température élevée pendant un certain temps pour produire un précurseur de spinelle comprenant de l'oxyde de lithium-manganèse dopé au nickel ;
la soumission du précurseur à un traitement par micro-ondes, pour obtenir un précurseur traité ; et ensuite
le recuit du précurseur traité, pour obtenir un matériau de spinelle d'oxyde de lithium-manganèse dopé au nickel.

2. Procédé selon la revendication 1, dans lequel le matériau précurseur de manganèse solide est un oxyde, un hydroxyde ou un sel de manganèse ; le matériau précurseur solide de nickel est un oxyde, un hydroxyde ou un sel de nickel ; le matériau précurseur de lithium solide est un oxyde, un hydroxyde ou un sel de lithium ; et le combustible ou l'agent réducteur est l'urée, l'hydrazine, la glycine ou un hydrate de carbone.

3. Procédé selon la revendication 1 ou la revendication 2, dans lequel la température élevée à laquelle le mélange est chauffé est d'au moins 400°C, et/ou dans lequel la période de temps pendant laquelle le mélange est maintenu à la température élevée est d'au moins 5 minutes, et/ou dans lequel le traitement par micro-ondes comprend la soumission du précurseur à des micro-ondes pendant 10 à 30 minutes, et/ou dans lequel le recuit du précurseur traité est effectué à une température qui est suffisamment élevée pour cristalliser le précurseur.

4. Procédé selon la revendication 3, dans lequel le recuit est effectué à une température d'au moins 700°C.

5. Procédé selon l'une quelconque des revendications 1 à 4 incluses, dans lequel le matériau d'oxyde de lithium-manganèse est LiMn$_2$O$_4$ ("LMO"), tandis que le matériau de spinelle d'oxyde de lithium-manganèse dopé au nickel est LiMn$_{1.8}$Ni$_{0.2}$O$_4$ ("LMNO").

6. Matériau de spinelle d'oxyde de lithium-manganèse dopé au nickel lorsqu'il est produit par le procédé selon l'une quelconque des revendications 1 à 5 incluses.

7. Pile électrochimique, qui comprend un boîtier de pile, une cathode, une anode et un électrolyte dans le boîtier de pile, dans laquelle la cathode est isolée électroniquement de l'anode mais couplée électrochimiquement à celle-ci par l'électrolyte, la cathode comprenant un matériau de spinelle d'oxyde de lithium-manganèse dopé au nickel produit par un procédé selon l'une quelconque des revendications 1 à 5, et la pile pouvant être soumise à au moins 50 cycles de charge/décharge à une température de fonctionnement élevée, tout en maintenant au moins 80 % de sa capacité initiale.

8. Pile électrochimique selon la revendication 7, dans laquelle la température de fonctionnement élevée est d'environ 60°C, et/ou dans laquelle le matériau de spinelle d'oxyde de lithium-manganèse dopé au nickel est celui de la revendication 5.

9. Pile électrochimique selon l'une quelconque des revendications 7 ou 8, dans laquelle l'anode comprend du lithium (Li), et/ou dans laquelle l'électrolyte est $LiPF_6$, éventuellement mélangé avec du carbonate d'éthylène et/ou du carbonate de diméthyle.

10. Procédé de fabrication d'une pile électrochimique, qui comprend le chargement, dans un boîtier de pile, d'un électrolyte, d'une anode et d'une cathode, la cathode comprenant un matériau de spinelle d'oxyde de lithium-manganèse dopé au nickel, produit par un procédé selon l'une quelconque des revendications 1 à 5.

11. Procédé selon la revendication 10, dans lequel le matériau de spinelle d'oxyde de lithium-manganèse dopé au nickel est celui de la revendication 5.

12. Procédé de fonctionnement d'une pile électrochimique, lequel procédé comprend l'application d'un potentiel de charge à la pile électrochimique selon l'une quelconque des revendications 7 à 9, ce qui fait que le lithium de la cathode forme au moins une partie de l'anode ;
le fait de permettre au potentiel de décharge de la pile d'atteindre 3,5 à 4,3 V par rapport au lithium métal, et l'état de valence moyen du manganèse étant d'environ 3,5+ ou plus pendant la charge et la décharge de la pile ; et la soumission de la pile à au moins 50 cycles de charge/décharge à une température de fonctionnement élevée, chaque cycle comprenant l'application à la fois du potentiel de charge et du potentiel de décharge, tout en maintenant au moins 80 % de la capacité initiale de la pile.

13. Procédé selon la revendication 12, dans lequel le potentiel de décharge est autorisé à atteindre 3,8 à 4,2 V par rapport au lithium métal.

14. Procédé selon la revendication 12 ou la revendication 13, dans lequel la température de fonctionnement élevée est d'environ 60°C.

Fig.1.

Fig.1 (continue)

Fig.2

Fig.3

Fig.4

Fig.5

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **CHARLES J. JAFTA et al.** Microwave-Assisted Synthesis of High-Voltage Nanostructured LiMn1.5Ni0.5O4 Spinel: Tuning the Mn3+ Content and Electrochemical Performane. *ACS APPLIED MATERIALS & INTERFACES,* 14 August 2013, vol. 5 (15), 7592-7598
- Solid chemical reaction in microwave and millimeter-wave field for the syntheses of LiMn2O4 compound. **LIU H et al.** MATERIALS CHEMISTRY AND PHYSICS. Elsevier, 15 December 2004, vol. 88
- Research progress in high voltage spinel LiNi0.5Mn1.5O4 material. **SANTHANAM R et al.** JOURNAL OF POWER SOURCES. Elsevier, 01 September 2010, vol. 195, 5442-5451
- **KOMABA, S. ; TSUCHIKAWA, T. ; OGATA, A.** Enhancement of Pseudo-capacitive Behaviors of Birnessite Type Manganese Dioxide by Electrolyte Additive. *ECS Transactions,* 2008, vol. 16, 201-205
- **YANG, K. ; SU, J. ; ZHANG, L. ; LONG, Y. ; LV, X. ; WEN, Y.** Urea Combustion Synthesis of LiNi0.5Mn1.5O4 as a Cathode Material for Lithium Ion Batteries. *Particuology,* 2012, vol. 10, 765-770
- **MANTHIRAM, A. ; CHEMELEWSKI, K. R. ; LEE, E. S.** A Perspective on the High-Voltage LiMn1.5Ni0.5O4 Spinel Cathode for Lithium-Ion Batteries. *Energy Environ. Sci.,* 2014, vol. 7, 1339-1350
- **JAFTA, C.J. ; OZOEMENA, K. I. ; MATHE, M. K. ; ROOS, W. D.** Synthesis, Characterisation and Electrochemical Intercalation Kinetics of Nanostructured Aluminium-Doped Li [Li0.2Mn0.54Ni0.13Co0.13]O2 Cathode Material for Lithium Ion Battery. *Electrochim. Acta,* 2012, vol. 85, 411-422
- **MOHAMEDI, M. ; MAKINO, M. ; DOKKO, K. ; ITOH, T. ; UCHIDA, I.** Electrochemical Investigation of LiNi0.5Mn1.5O4 Thin Film Intercalation Electrodes. *Electrochim.Acta,* 2002, vol. 48, 79-84